(19) **Europäisches Patentamt / European Patent Office / Office européen des brevets**

(11) **EP 4 372 435 B1**

(12) **FASCICULE DE BREVET EUROPEEN**

(45) Date de publication et mention de la délivrance du brevet:
**31.12.2025   Bulletin 2026/01**

(21) Numéro de dépôt: **23210351.5**

(22) Date de dépôt: **16.11.2023**

(51) Classification Internationale des Brevets (IPC):
**G02B 6/124** *(2006.01)*   **G02B 6/34** *(2006.01)*
**G01N 21/00** *(2006.01)*   **G02B 6/136** *(2006.01)*
G02B 6/12 *(2006.01)*   G01J 3/10 *(2006.01)*
G01J 3/02 *(2006.01)*   G01J 3/28 *(2006.01)*

(52) Classification Coopérative des Brevets (CPC):
**G02B 6/34; G01J 3/0218; G01J 3/0259;
G01J 3/108; G01J 3/1895; G01J 3/2803;
G02B 6/136;** G02B 6/124; G02B 2006/12138

(54) **PUCE PHOTONIQUE ET SYSTÈME D'IMAGERIE INFRAROUGE UTILISANT UNE TELLE PUCE PHOTONIQUE**

PHOTONISCHER CHIP UND INFRAROT-ABBILDUNGSSYSTEM MIT EINEM SOLCHEN PHOTONISCHEN CHIP

PHOTONIC CHIP AND INFRARED IMAGING SYSTEM USING SUCH A PHOTONIC CHIP

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:   **18.11.2022   FR 2212044**

(43) Date de publication de la demande:
**22.05.2024   Bulletin 2024/21**

(73) Titulaire: **Commissariat à l'Energie Atomique et aux Energies Alternatives
75015 Paris (FR)**

(72) Inventeurs:
• **DUPOY, Mathieu
  38500 Coublevie (FR)**
• **MONPEURT, Cyrielle
  38000 Grenoble (FR)**

(74) Mandataire: **Fidal Innovation
4-6 avenue d'Alsace
92400 Courbevoie (FR)**

(56) Documents cités:
**EP-A1- 4 016 053     EP-A1- 4 016 054
FR-A1- 3 061 553     US-B1- 9 588 289**

## Description

### DOMAINE DE L'INVENTION

La présente invention se rapporte à une puce photonique et à un système d'imagerie infrarouge utilisant une telle puce photonique. Plus précisément, la puce photonique est destinée à éclairer une scène dans le domaine spectral du moyen infrarouge, pour des applications de spectroscopie infrarouge multispectrale.

### ARRIÈRE-PLAN TECHNOLOGIQUE

Dans le domaine des puces photoniques et des systèmes d'imagerie dans le moyen infrarouge, le document EP4016054 décrit un composant optique intégré sur silicium pour de l'imagerie par réflexion totale atténuée pour des applications de spectroscopie infrarouge. Le composant optique comporte un substrat d'appui et au moins deux guides d'onde superposés l'un sur l'autre selon deux plans parallèles afin que chaque guide d'onde soit dédié à la réception et à l'envoi d'une longueur d'onde déterminée et différente. Pour chaque guide d'onde, une source lumineuse envoie de la lumière d'une longueur d'onde prédéterminée. Les guides d'onde comprennent un réseau de diffraction associé permettant d'extraire la lumière hors du guide d'onde en vue d'éclairer un échantillon positionné sur une face supérieure du substrat. La lumière extraite hors du guide est dirigée vers la surface du substrat au niveau de l'échantillon. La lumière est réfléchie totalement à l'interface entre la surface du substrat et l'échantillon. La lumière réfléchie est dirigée vers un détecteur matriciel apte à analyser la lumière qu'il reçoit pour obtenir des informations sur l'échantillon.

Un premier inconvénient de ce document est que le composant décrit est adapté uniquement à la réflexion totale atténuée. Or, dans certains cas, d'autres modalités de mesures sont à privilégier, par exemple des mesures en réflexion, transmission et/ou transflexion. Un second inconvénient de ce document est que la disposition superposée des guides d'onde peut entraîner un problème d'intégration, voire des difficultés de fabrication.

Le document EP4016053 décrit un composant optique intégré sur silicium pour de l'imagerie interférométrique dans le moyen infrarouge. Le composant comprend un bras comprenant un guide d'onde auquel est associé un réseau de diffraction et un second bras comprenant également un guide d'onde auquel est associé un réseau de diffraction. Les guides d'onde sont dans un même plan et sont configurés pour extraire de la lumière hors de leur bras respectif vers respectivement une surface réfléchissante et une surface d'échantillon à analyser situées entre les deux bras. De cette manière, une image de phase de l'échantillon peut être effectuée à partir du faisceau lumineux ayant interagi avec l'échantillon et un faisceau lumineux n'ayant pas interagi avec l'échantillon mais ayant été réfléchi par la surface réfléchissante.

Un désavantage du composant décrit dans ce document est qu'il est spécifiquement adapté à l'interférométrie de deux faisceaux de même longueur d'onde pour l'analyse d'un échantillon. Un second désavantage est qu'il nécessite l'utilisation conjointe de deux échantillons, un pour chaque bras, pour effectuer l'analyse.

La présente invention cherche à résoudre au moins partiellement les problèmes mentionnés ci-dessus.

### RÉSUMÉ DE L'INVENTION

Ainsi, l'invention se rapporte à une puce photonique selon la revendication 1.

Ainsi, la puce photonique selon l'invention est configurée, d'une part, pour éclairer une scène au moyen de faisceaux lumineux de différentes longueurs d'onde. De plus, la répartition des guides d'onde autour de la gravure du substrat et dans un même plan facilite la fabrication et l'intégration de la puce photonique dans un système d'éclairage plus large. Enfin, la configuration spécifique de la puce photonique permet au faisceau lumineux extrait du substrat de se réfléchir sur la scène, qui se trouve au niveau de la gravure du substrat. Le faisceau lumineux réfléchi par la scène peut ensuite être analysé.

L'invention se rapporte également à un système d'imagerie selon la revendication 9.

Selon différents aspects, il est possible de prévoir l'une et/ou l'autre des caractéristiques ci-dessous prises seules ou en combinaison :

la gravure du substrat est configurée pour être formée par une gravure isotrope du substrat, de sorte que la gravure forme un cercle selon une vue de dessus du substrat;

la gravure du substrat est configurée pour être formée par une gravure anisotrope du substrat, de sorte que ladite gravure du substrat forme un polygone selon une vue de dessus du substrat;

chaque réseau de diffraction est positionné autour de la gravure du substrat selon un plan de symétrie dudit substrat, ledit plan de symétrie étant perpendiculaire au plan formé par la face gravée du substrat.

Il en résulte un éclairage homogène de la scène. De plus, considérant la gravure isotrope qui a une forme de cercle vu de haut, un très grand nombre de guides d'onde et de faisceaux lumineux peut être envisagé du fait de la symétrie centrale d'une telle figure géométrique.

La puce comprend en outre un guide d'onde d'entrée dans lequel tous les faisceaux lumineux sont destinés à être injectés, la puce photonique comprenant en outre au moins un démultiplexeur configuré pour démultiplexer les faisceaux lumineux en sortie du guide d'onde d'entrée de manière à injecter au moins un faisceau lumineux dans au moins deux guide d'onde de la pluralité de guides d'onde.

Cela permet de ne pouvoir utiliser qu'un module d'éclairage émettant les faisceaux lumineux, ce qui est avantageux dans le cas où la puce photonique est destinée à être utilisée dans le cas d'un système de taille réduite.

La puce comprend en outre une pluralité de guides d'onde d'entrée dans chacun desquels une partie des faisceaux lumineux est destinée à être injectés, la puce photonique comprenant en outre autant de démultiplexeurs que de guides d'onde d'entrée, chaque démultiplexeur étant associé à un guide d'onde d'entrée, les démultiplexeurs étant configurés pour démultiplexer les faisceaux lumineux en sortie du guide d'onde d'entrée de manière à injecter au moins un faisceau lumineux dans des guides d'onde de la pluralité de guides d'onde.

Les guides d'onde sont destinés à recevoir des faisceaux lumineux appartenant au domaine du moyen-infrarouge.

Au moins un guide d'onde parmi la pluralité de guides d'onde est configuré pour recevoir au moins deux faisceaux lumineux de longueurs d'onde différentes.

Le nombre de guides d'onde peut être limité tandis que le nombre de longueurs d'onde différentes peut être augmenté. La puce est donc un système efficace et compact.

La puce photonique est d'une épaisseur égale à une distance de travail entre le module d'imagerie et la scène.

La puce photonique sert donc d'entretoise.

La distance de travail entre le module d'imagerie et la scène est du même ordre de grandeur qu'une longueur d'une surface à éclairer de la scène, la distance de travail étant comprise entre $100\mu m$ et $1,5mm$.

Il n'y a pas besoin de dispositif optique supplémentaire tel qu'une lentille.

Les faisceaux lumineux appartiennent au domaine de l'infrarouge.

## BRÈVE DESCRIPTION DES DESSINS

Des modes de réalisation de l'invention seront décrits ci-dessous par référence aux dessins, décrits brièvement ci-dessous :

[Fig. 1A] est une vue de dessus d'une puce photonique selon une réalisation.
[Fig. 1B] est une vue en coupe de la puce photonique de la figure 1A selon l'axe AA'.
[Fig. 2A] est une vue de dessus d'une puce photonique selon une autre réalisation.
[Fig. 2B] est une vue en coupe de la puce photonique de la figure 2A selon l'axe AA'.
[Fig. 3] représente un autre mode de réalisation d'une puce photonique,
[Fig. 4] est une vue générale d'un système d'imagerie infrarouge utilisant une puce photonique selon une réalisation.
[Fig. 5] illustre l'extraction d'un faisceau lumineux selon une réalisation.
Sur les dessins, des références identiques désignent des objets identiques ou similaires.

## DESCRIPTION DÉTAILLÉE

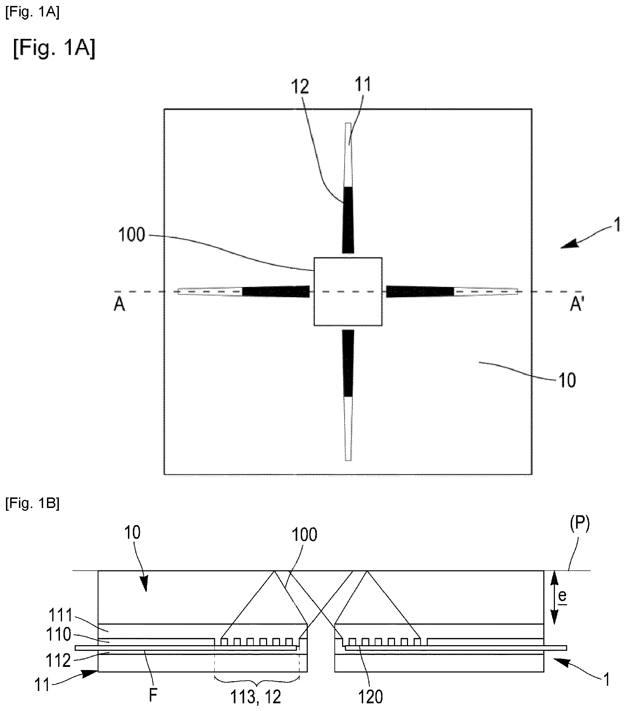

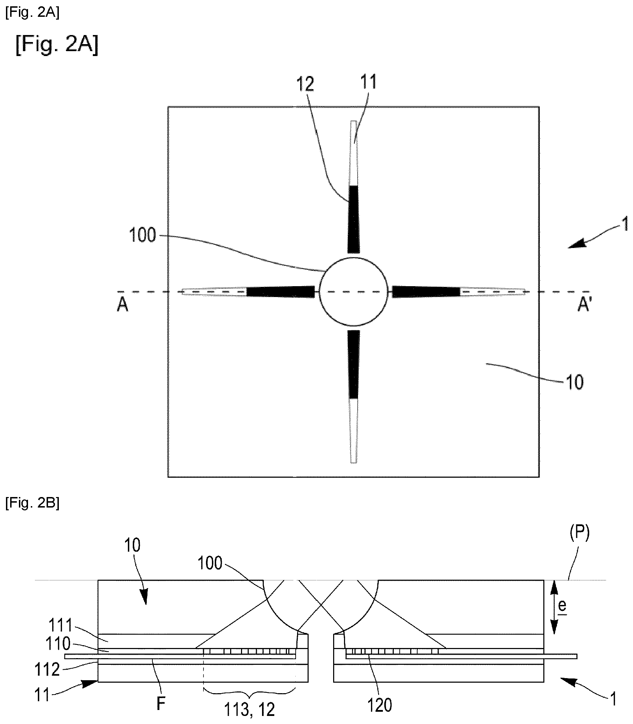

Figures 1A et 1B illustrent une puce photonique 1 selon un exemple de réalisation et les figures 2A et 2B illustrent une puce photonique 1 selon un autre exemple de réalisation.

La puce photonique 1 est une puce photonique d'éclairage, destinée à combiner des faisceaux lumineux appartenant au domaine de l'infrarouge pour l'éclairage d'une scène.

Dans la description, le terme d'infrarouge utilisé dans le texte fait référence à une partie du spectre lumineux appartenant à une bande spectrale allant de $0,78\mu m$ à $50\mu m$, et préférentiellement allant de $2\mu m$ à $12\mu m$.

La puce photonique 1 comprend un substrat 10. Le substrat 10 est un substrat silicium cristallin. L'épaisseur e du substrat est avantageusement comprise entre $100\mu m$ et $1,5mm$, tel qu'il sera expliqué ci-après. Pour obtenir l'épaisseur e voulue, le substrat peut être aminci.

Le substrat 10 présente au moins une gravure 100 formant une gravure 100 du substrat 10, où la lumière est extraite hors de la puce photonique 1. Avantageusement, la scène à éclairer se trouve au niveau de la gravure 100 du substrat 10.

Comme visible sur les figures 1A et 1B, la gravure 100 peut être obtenue par une gravure anisotrope du substrat. Avantageusement, la gravure 100 forme un parallélogramme, avantageusement un carré, un rectangle ou un octogone, selon une vue de haut (figure 1A). Dans ce mode de réalisation, la gravure 100 du substrat correspond au carré vu de haut, formé par les gravures 100 du substrat 10.

Le principe de gravure anisotrope formant un octogone vu de haut est décrit dans l'article scientifique de Rola, Krzysztof P., Konrad Ptasiński, Adrian Zakrzewski, et Irena Zubel. 2014. « Silicon 45° Micromirrors Fabricated by Etching in Alkaline Solutions with Organic Additives ». Microsystem Technologies 20(2): 221-26.

Sur les figures 2A et 2B, la gravure 100 est obtenue par une gravure isotrope du substrat, de sorte que, vu de haut, la gravure 100 a une forme de cercle. Dans ce mode de réalisation, la gravure 100 du substrat correspond au cercle vu de haut, formé par les gravures 100 du substrat 10.

Dans ces deux modes de réalisation, la scène à éclairer se trouve au niveau de la gravure 100 du substrat, formée par les gravures 100.

La puce photonique comprend également au moins un guide d'onde 11, et de préférence une pluralité de guides d'onde 11. Les guides d'onde 11 sont des guides d'onde linéaires aptes à guider un faisceau lumineux F se propageant dans lesdits guides d'onde 11. Les guides d'onde 11 sont formés par un cœur 110 dans lequel circule le faisceau lumineux F et d'une gaine 111, assurant une différence d'indice optique souhaitée entre le cœur et le milieu entourant le cœur. S'agissant des guides d'onde illustrés, chaque guide comprend un cœur 110 intercalé entre deux gaines 111. Le faisceau lumineux F est guidé dans le cœur 110 par réflexions successives aux interfaces entre le cœur 110 et chacune des gaines 111 entre lesquelles le cœur 110 est intercalé.

Avantageusement, le cœur 110 des guides d'onde 11 sont en germanium et les gaines 111 sont en silicium germanium. Les guides d'onde 11 viennent s'inscrire sur le substrat 10. Dans une première configuration, les guides d'onde 11 sont configurés pour guider un seul faisceau lumineux d'une longueur d'onde particulière. Avantageusement, au moins deux guides d'onde 11 parmi la pluralité de guides d'onde sont configurés pour respectivement guider des faisceaux lumineux de longueurs d'onde différentes, de sorte que la puce photonique 1 est adaptée pour de l'éclairage multispectral dans l'infrarouge.

Selon une deuxième configuration, pouvant venir en alternative ou en addition à la première configuration décrite ci-avant, au moins un guide d'onde 11 ou une majorité de guides d'onde 11 ou tous les guides d'onde 11, sont aptes à guider plusieurs faisceaux lumineux F. Dans cette configuration, un guide d'onde 11 peut être apte à guider deux faisceaux lumineux de longueur d'onde identique ou de longueurs d'onde différentes, si les longueurs d'onde des faisceaux lumineux se propageant dans le guide sont proches. Dans un exemple, deux longueurs d'onde sont considérées comme proches si leur différence est inférieure ou égale à 0,3$\mu$m.

Avantageusement, les guides d'onde 11 sont monomodes pour toutes les longueurs d'onde des faisceaux lumineux F considérés. Plus précisément, les guides d'onde 11 sont monomodes à la plus petite longueur d'onde considérée.

Dans chaque guide d'onde est formé un réseau de diffraction dont le pas peut être constant ou variable, en fonction en fonction du type de la gravure. Pour une gravure isotrope, le pas est variable pour permettre d'obtenir en sortie du substrat un faisceau collimaté malgré un profil concave de la gravure. En revanche, pour une gravure anisotrope, un pas constant assure une collimation du faisceau car le profil de la gravure est alors droit.

Les guides d'onde 11 présentent une zone d'entrée 112 et une zone de sortie 113. Les guides d'onde 11 reçoivent un faisceau lumineux au niveau de leur entrée 112. Typiquement, un tel faisceau lumineux est injecté à partir d'un module d'illumination comprenant au moins une source lumineuse, qui sera décrite plus en détails ci-après. Le faisceau lumineux F se propage ensuite dans le guide d'onde tel que décrit ci-dessus jusqu'à la zone de sortie 113 au niveau de laquelle le faisceau lumineux va être extrait hors du guide d'onde 11.

La zone de sortie des guides d'onde correspond au réseau de diffraction associé au guide d'onde considéré, le réseau de diffraction permettant d'extraire le faisceau lumineux hors du guide d'onde, vers la gravure du substrat.

L'épaisseur de tous les guides d'onde 11 de la puce photonique 1 peuvent avoir la même épaisseur, pour une facilité de fabrication. L'épaisseur des guides d'onde 11 peut être comprise entre 500nm et 3$\mu$m.

Alternativement, les zones d'entrée et/ou de sortie 112, 113 des guides d'onde 11 peuvent avoir, en vue de dessus, une forme parallélépipédique rectangle, prismique ou adiabatique afin de faciliter l'injection de la lumière dans le guide d'onde ou son extraction. La largeur d'un guide d'onde 11 peut donc être variable au niveau de ses zones d'entrée et/ou de sortie 112, 113. Dans cette configuration et afin d'assurer la monomodalité du guide d'onde 11, la largeur du guide d'onde 11 dans sa partie la plus étroite est comprise entre 500nm et 3$\mu$m. Dans la partie la plus large du guide d'onde 11, la largeur du guide d'onde 11 est comprise entre la valeur de la largeur la plus étroite (par exemple 500nm) et la grandeur de la zone à éclairer.

Dans une réalisation, les guides d'onde 11 s'étendent linéairement dans un même plan, destiné à être parallèle à un plan P formé par la face gravée du substrat.

On entend par « plan P formée par la face gravée » la face plane du substrat dans laquelle la gravure a été effectuée. La gravure en elle-même n'est pas prise en compte dans la définition du plan P formé par la face gravée du substrat.

Selon une réalisation, les réseaux de diffraction de chaque guide d'onde 11 sont positionnées autour de la gravure du substrat 10 selon un plan de symétrie du substrat 10, ledit plan de symétrie étant perpendiculaire au plan formé par la face gravée du substrat.

Sur les figures 1A, 1B et 2A, 2B, les guides d'onde 11 sont entièrement positionnés de manière symétrique par rapport à la gravure 100 du substrat. En d'autres termes, les guides d'onde 11 s'étendent symétriquement depuis leur zone d'entrée 112 jusqu'à leur zone de sortie 113.

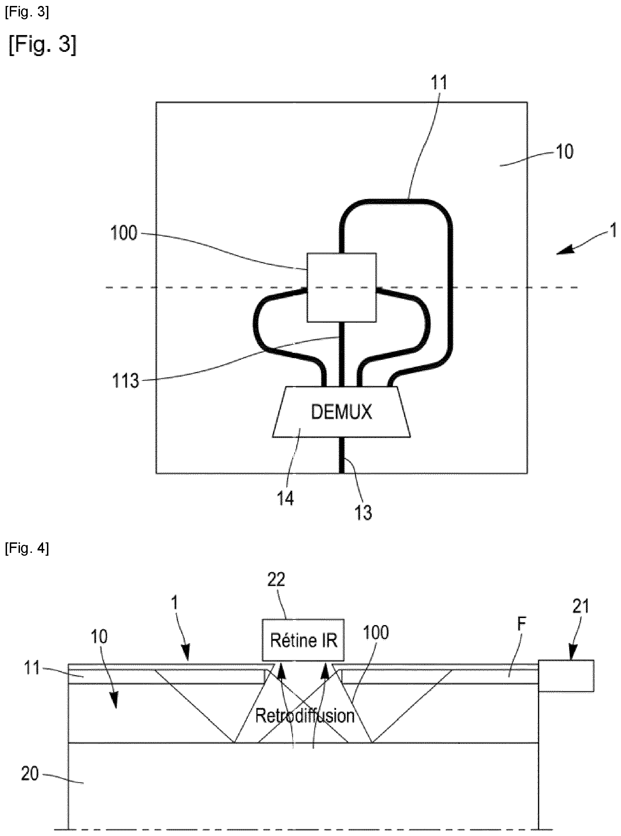

La figure 3 illustre une variante de réalisation, sur laquelle une puce photonique 1 est illustrée en vue de dessus. La puce photonique 1 comprend une gravure 100 obtenue par une gravure anisotrope du substrat, bien que la variante de réalisation de la figure 3 soit également applicable au cas où la gravure est obtenue par une gravure isotrope du substrat.

Dans cette variante, la puce photonique comprend, outre la pluralité de guides d'onde 11, un guide d'onde d'entrée 13. Ce guide d'onde d'entrée 13 est destiné à recevoir la pluralité de faisceaux lumineux F. La puce photonique comprend un démultiplexeur 14, associé au guide d'onde d'entrée 13. Le démultiplexeur 14 est configuré pour injecter au moins un faisceau lumineux dans chacun des guides d'onde 11 de la pluralité de guides d'onde 11 qui lui est associée. Tous les guides d'onde 11 s'étendent dans un même plan, destiné à être parallèle au plan (P) de la face gravée du substrat. Les réseaux de diffraction des guides d'onde sont positionnés autour de la gravure du substrat, selon un plan de symétrie de la gravure perpendiculaire au plan (P) formé par la face gravée du substrat.

Avantageusement, le nombre de guides d'onde 11 est égal au nombre de longueurs d'onde de la gamme de longueurs d'onde considérée. En variante, au moins un guide d'onde 11 peut être associé à deux longueurs d'onde différentes si elles sont proches, par exemple si la différence de longueurs d'onde est inférieure ou égale à $0,3\mu m$.

Dans ce mode de réalisation, le guide d'onde d'entrée 13 est monomode pour la plus petite longueur d'onde considérée et, de ce fait, pour toute la gamme de longueurs d'onde considérée.

Avantageusement, l'épaisseur du guide d'onde d'entrée 13 et de la pluralité de guides d'onde 11 est la même, afin de faciliter la fabrication de la puce photonique 1. Le guide d'onde d'entrée 13 peut être de forme parallélépipédique rectangle ou prisme ou de forme adiabatique pour faciliter l'injection des faisceaux lumineux dans le guide d'onde d'entrée 13.

Le démultiplexeur 14 peut être de type AWG (« Arrayed Waveguide Grating », Réseau de guides d'onde en réseau en français), de type PCG (« Planar Concave Grating », Réseau plan concave en français), de type MZI (« Mach-Zehnder Interferometer », Interféromètre de Mach-Zehnder en français) ou de type MMI (« MultiModal Interference coupler », Coupleur d'interférence multimode en français).

Dans tous les modes de réalisations décrits ci-avant, à chaque guide d'onde 11 est associé un réseau de diffraction 12 permettant l'extraction de la lumière hors du guide d'onde 11 associé. Chaque réseau de diffraction 12 est optimisé pour une longueur d'onde particulière. Les réseaux de diffraction 12 présentent des pas 120 pouvant être constants ou variables. L'ordre de grandeur des pas 120 des réseaux de diffraction 12 est compris entre le micron et quelques microns. Les pas 120 sont choisis pour permettre l'extraction du faisceau lumineux F hors du guide d'onde 11 associé au réseau de diffraction 12 considéré.

Il en résulte que les zones de sortie 113 des cœurs 110 des guides d'onde 11 correspondent aux zones où sont prévus les réseaux de diffraction 12.

Les faisceaux lumineux extraits par les réseaux de diffraction 12 hors des guides d'onde 11 sont dirigés vers la gravure 100 du substrat 10 de manière à atteindre la scène à éclairer.

D'après la loi de Snell-Descartes pour la réfraction, l'angle critique au-delà duquel les faisceaux lumineux issus de la réfraction des réseaux de réfraction 12 subiront le phénomène de réflexion totale interne et ne pourront effectivement sortir du substrat 10 et éclairer la scène vaut environ 17° dans la gamme de longueurs d'onde considérée, le silicium étant très peu dispersif dans l'infrarouge. Ainsi, les faisceaux lumineux issus de la diffraction des réseaux doivent être compris dans un cône d'angle de ± 17° par rapport à la normale au dioptre silicium/air.

Les faisceaux lumineux extraits par les réseaux de diffraction 12 se propagent équitablement dans deux directions opposées, vers le substrat 10 et vers la gaine 111 supérieure. Par conséquent, avantageusement, si l'angle d'extraction est supérieur à l'angle critique de 17° ou si la face gravée du substrat 10 est métallisée, l'épaisseur de la gaine 111 supérieure au niveau de la zone de sortie 113 du cœur 110 est déterminée de façon à obtenir, à la longueur d'onde d'utilisation, des interférences constructives entre le faisceau lumineux extrait de la gaine 111 supérieure et le faisceau lumineux issu de la réflexion sur la face gravée du substrat 10.

Pour permettre aux faisceaux lumineux d'être effectivement extraits du substrat 10 vers la scène à éclairer, l'angle de gravure du substrat dans le cas où la gravure est obtenue par une gravure anisotrope du substrat (figures 1A et 1B) est déterminé par les plans cristallins du silicium formant le substrat 10.

Par exemple, la gravure peut se faire sur les plans cristallins ·{111}· en utilisant un substrat ·⟨100⟩ et l'angle de gravure est alors égal à 54,74°.

Selon un autre exemple, l'angle de gravure peut être égal à 45° en utilisant un substrat ·⟨100⟩

Le pas 120 des réseaux de diffraction 12 peut alors être avantageusement constant et choisi de sorte qu'à la longueur d'onde d'utilisation l'angle d'extraction après réfraction est égal à l'angle d'incidence souhaité sur la scène à éclairer qui est destinée à se trouver au niveau de la gravure du substrat, voir figure 4.

Le pas 120 des réseaux de diffraction 12 est alors choisi suivant :

$$ p \;=\; \frac{\lambda}{n_{eff} - n_{SiGe}\sin(\theta_{SiGe})}, $$

Où $\lambda$ est la longueur d'onde d'utilisation ou la longueur d'onde d'utilisation médiane, $n_{eff}$ est l'indice effectif du mode à la longueur d'onde $\lambda$, $n_{SiGe}$ est l'indice de la gaine 111 en Silicium Germanium et $\theta_{SiGe}$ est l'angle d'extraction considéré dans le Silicium Germanium. Pour obtenir l'angle d'extraction dans l'air $\theta_{air}$, il suffit d'utiliser la loi de Snell-Descartes.

Dans cette variante, puisque les faisceaux lumineux extraits par les réseaux de diffraction 12 sont collimatés, la longueur des réseaux de diffraction 12 dépend de la longueur caractéristique de la surface à éclairer et de l'angle d'extraction $\theta_{air}$.

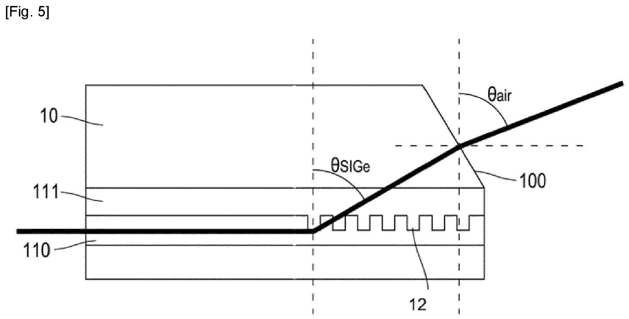

Cette réalisation est illustrée sur la figure 5.

Dans un cas particulier, si l'angle d'extraction des réseaux de diffraction 12 est choisi de telle sorte à ce que le faisceau lumineux arrive perpendiculairement sur les flancs de la gravure 100, alors la longueur des réseaux de diffraction 12 est égale à la longueur caractéristique de la surface de la scène à éclairer.

Optionnellement, les flancs de la gravure 100 obtenue par une gravure anisotrope du substrat peuvent être traités antireflet pour limiter les pertes de Fresnel à l'interface Silicium/air. Le traitement antireflet appliqué est par exemple un dépôt d'une fine couche de ZnS. L'antireflet est optimisé pour une longueur d'onde particulière de la gamme de longueurs d'onde d'utilisation, par exemple la longueur d'onde médiane d'utilisation. L'épaisseur de la couche antireflet est par exemple égale à un quart de la longueur d'onde d'utilisation médiane, typiquement entre 1 et $3\mu m$.

Considérant le cas où la gravure est obtenue par une gravure isotrope du substrat (figures 2A et 2B), le profil de la gravure 100 visible sur la figure 2B est courbe, concave et divergent. Le profil n'est pas complètement circulaire car la gravure 100 est plus efficace dans la direction verticale que dans la direction horizontale.

Avantageusement, dans ce mode de réalisation le pas 120 des réseaux de diffraction 12 n'est pas constant et l'angle d'extraction $\theta SiGe$ n'est pas non plus constant, afin d'obtenir un faisceau lumineux collimaté hors du substrat 10 en tenant compte du dioptre concave de la face gravée, agissant comme une lentille divergente.

Le pas 120 des réseaux 12 est choisi de telle sorte qu'à la longueur d'onde d'utilisation et à chaque motif des réseaux de diffraction 12, l'angle d'extraction après réfraction est égal à l'angle d'incidence souhaitée sur la scène. Le pas 120 variable est alors choisi grâce à la loi des réseaux au premier ordre.

Dans cette variante, la longueur des réseaux de diffraction 12 dépend de la longueur caractéristique de la surface de la scène à éclairer, de l'angle d'extraction $\theta air$ et du profil de la gravure 100 lorsqu'elle est obtenue par une gravure isotrope du substrat.

Notamment, l'ordre de grandeur du pas 120 variable des réseaux 12 pour les longueurs d'onde considérées est le micron, voire quelques microns. Pour chaque variante de gravures, le facteur de remplissage est déterminé de façon à homogénéiser l'éclairement sur la scène en compensant la loi exponentielle du principe de Beer-Lambert. Le facteur de remplissage est choisi croissant en fonction de la position du motif des réseaux 12, dans le sens de la propagation de la lumière.

Optionnellement, les flancs de cette gravure 100 peuvent être traités antireflet pour limiter les pertes de Fresnel à l'interface du substrat en silicium et de l'air. Le traitement antireflet appliqué est par exemple un dépôt d'une fine couche de ZnS. L'antireflet est optimisé pour une longueur d'onde particulière de la gamme de longueurs d'onde d'utilisation, par exemple la longueur d'onde médiane d'utilisation. L'épaisseur de la couche antireflet est par exemple égale à un quart de la longueur d'onde d'utilisation médiane, typiquement entre 1 et $3\mu m$.

La figure 4 illustre un système d'imagerie infrarouge 2 comprenant une puce photonique 1 telle que décrite ci-avant. La puce photonique illustrée comprend une gravure 100 formée par une gravure anisotrope du substrat, bien que tous les modes de réalisation décrits ci-avant soient applicables au système 2.

Le système 2 permet d'imager une surface d'une scène 20.

Le système 2 comprend au moins un module d'illumination envoyant des faisceaux lumineux F dans le domaine de l'infrarouge dans la gamme de longueurs d'onde considérée (entre $2\mu m$ et $12\mu m$). Le module d'illumination comprend au moins une source lumineuse 21, et avantageusement une pluralité de sources lumineuses, chacune apte à émettre au moins un faisceau lumineux. Les sources lumineuses 21 peuvent être des lasers à cascade quantique (QCL), des lasers à cascade interbande (ICL), à cavité externe ou interne. Au moins deux faisceaux lumineux ont des longueurs d'onde différentes, permettant une application multispectrale.

Il y a, avantageusement, au moins un faisceau lumineux injecté par guide d'onde 11. Dans une application particulière, plusieurs faisceaux lumineux peuvent être injectés dans un guide d'onde si leurs longueurs d'onde respectives sont proches. Dans un exemple, deux longueurs d'onde sont considérées comme proches si leur différence est inférieure ou égale à $0,3\mu m$.

Le système 2 comprend en outre un module d'imagerie infrarouge 22. Le module 22 peut comprendre une rétine, par exemple une matrice de photodétecteurs infrarouge tels qu'une matrice de photodiodes à semi-conducteurs ou une matrice de microbolomètres. Les dimensions latérales du module 22 sont de l'ordre du millimètre ou de quelques millimètres. Le module 22 est avantageusement situé à une courte distance de travail, WD, comprise entre $100\mu m$ et 1,5mm, de manière à réaliser une image de la scène à éclairer 20 et ce, sans lentille ou autre système optique de formation d'image. La distance de travail WD est définie comme la distance entre la scène 20 et le module 22.

La puce photonique 1 telle que décrite permet de combiner les faisceaux lumineux provenant des sources lumineuses 21 et de les amener vers la scène 20 pour l'éclairer de façon homogène sur sa surface.

Avantageusement, la surface de la scène 20 à éclairer est de l'ordre de grandeur des dimensions latérales du module d'imagerie 22, soit de l'ordre du millimètre ou de quelques millimètres.

Comme visible sur la figure 4, la puce photonique 1 est située entre la scène 20 et le module 22. La surface à éclairer de la scène 20 est plus particulièrement située au niveau de la gravure 100 du substrat 10 de la puce photonique 1.

Avantageusement, l'épaisseur de la puce photonique dans le système 2 illustré est égale à la distance de travail WD, de sorte que la puce photonique 1 est apte à servir d'entretoise entre le module d'imagerie 22 et la scène 20.

Considérant la fabrication de la puce photonique 1, celle-ci est réalisée par des moyens connus. Notamment, un substrat de silicium cristallin est fourni qui peut être aminci pour atteindre la distance de travail WD souhaitée. Des épitaxies en Silicium Germanium, pour une première gaine 111, et en Germanium, pour le cœur 110, sont réalisées. Un polissage mécano-chimique peut ensuite être réalisé. Puis, une gravure partielle anisotrope du Germanium est réalisée pour obtenir les réseaux de diffraction 12. Une épitaxie de Silicium Germanium est ensuite réalisée pour obtenir la deuxième gaine 111 entourant le cœur 110. Une gravure anisotrope de l'empilement des gaines 111 et du cœur 110 est réalisée. L'empilement général est retourné, puis une gravure 100 anisotrope ou isotrope du substrat 10 silicium est réalisée.

## Revendications

1. Puce photonique pour l'éclairage d'une scène, la puce photonique comprenant :

   - un substrat (10) comprenant une face avec une gravure (100),
   - une pluralité de guides d'onde s'étendant linéairement dans un même plan, ledit plan étant parallèle à un plan formé par la face gravée du substrat (10), chaque guide d'onde (11) étant configuré pour guider au moins un faisceau lumineux,
   - une pluralité de réseaux de diffraction (12), chaque réseau de diffraction (12) étant respectivement formé dans un guide d'onde (11) de la pluralité de guides d'onde, chaque réseau de diffraction (12) étant configuré pour extraire, hors du guide d'onde (11) dans lequel il est formé et vers la gravure (100) du substrat (10), le faisceau lumineux se propageant dans ledit guide d'onde (11),
   dans laquelle la gravure (100) du substrat (10) est configurée pour extraire les faisceaux lumineux hors du substrat (10), vers la scène à éclairer, ladite scène se trouvant contre la face gravée du substrat (10) et au niveau de la gravure (100) du substrat (10),
   **caractérisé en ce qu'**au moins deux guides d'onde de la pluralité de guides d'onde sont configurés pour recevoir des faisceaux lumineux de longueurs d'onde différentes, chaque réseau de diffraction (12) étant configuré pour extraire, hors du guide d'onde (11) parmi les au moins deux guides d'onde dans lequel il est formé et vers la gravure (100) du substrat (10), le faisceau lumineux, parmi les faisceaux lumineux de longueurs d'onde différentes, se propageant dans ledit guide d'onde (11).

2. Puce photonique selon la revendication 1, dans laquelle la gravure (100) du substrat (10) est configurée pour être formée par une gravure isotrope du substrat (10), de sorte que la gravure (100) forme un cercle selon une vue de dessus du substrat (10).

3. Puce photonique selon la revendication 1, dans laquelle la gravure (100) du substrat (10) est configurée pour être formée par une gravure anisotrope du substrat (10), de sorte que ladite gravure (100) du substrat (10) forme un polygone selon une vue de dessus du substrat (10).

4. Puce photonique selon l'une des revendications 1 à 3, dans laquelle chaque réseau de diffraction (12) est positionné autour de la gravure (100) du substrat (10) selon un plan de symétrie dudit substrat (10), ledit plan de symétrie étant perpendiculaire au plan formé par la face gravée du substrat (10).

5. Puce photonique selon l'une des revendications précédentes, comprenant en outre un guide d'onde d'entrée (13) dans lequel tous les faisceaux lumineux sont destinés à être injectés, la puce photonique comprenant en outre au moins un démultiplexeur (14) configuré pour démultiplexer les faisceaux lumineux en sortie du guide d'onde d'entrée (13) de manière à injecter au moins un faisceau lumineux dans au moins deux guide d'onde (11) de la pluralité de guides d'onde.

6. Puce photonique selon l'une des revendications 1 à 5, comprenant en outre une pluralité de guides d'onde d'entrée dans chacun desquels une partie des faisceaux lumineux est destinée à être injectés, la puce photonique comprenant en outre autant de démultiplexeurs (14) que de guides d'onde d'entrée, chaque démultiplexeur (14) étant associé à un guide d'onde d'entrée (13), les démultiplexeurs (14) étant configurés pour démultiplexer les faisceaux lumineux en sortie du guide d'onde d'entrée (13) de manière à injecter au moins un faisceau lumineux dans des guides d'onde (11) de la pluralité de guides d'onde.

7. Puce photonique selon l'une des revendications précédentes, dans laquelle les guides d'onde sont destinés à recevoir des faisceaux lumineux appartenant au domaine du moyen-infrarouge.

8. Puce photonique selon l'une des revendications précédentes, dans laquelle au moins un guide d'onde (11) parmi la pluralité de guides d'onde est configuré pour recevoir au moins deux faisceaux lumineux de longueurs d'onde différentes.

9. Système d'imagerie comprenant :

    ° une puce photonique selon l'une des revendications précédentes,
    ° au moins un module d'illumination (21) configuré pour émettre une pluralité de faisceaux lumineux appartenant, dans laquelle au moins deux faisceaux lumineux parmi la pluralité de faisceaux lumineux ont des longueurs d'onde différentes, les faisceaux lumineux étant injectés dans les guides d'onde de la puce photonique,
    ° une scène, ladite scène se trouvant au niveau de la gravure (100) du substrat (10), et
    ° un module d'imagerie.

10. Système d'imagerie selon la revendication 9, dans lequel la puce photonique est d'une épaisseur égale à une distance de travail entre le module d'imagerie et la scène.

11. Système d'imagerie selon la revendication 9 ou 10, dans lequel la distance de travail entre le module d'imagerie et la scène est du même ordre de grandeur qu'une longueur d'une surface à éclairer de la scène, la distance de travail étant comprise entre 100$\mu$m et 1,5mm.

12. Système d'imagerie selon l'une des revendications 9 à 11, dans lequel les faisceaux lumineux appartiennent au domaine de l'infrarouge.


**Patentansprüche**

1. Photonischer Chip zur Beleuchtung eines Aufnahmebereichs, wobei der photonische Chip folgendes umfasst:

    - ein Substrat (10), das eine Fläche mit einer Ätzung (100) umfasst,
    - eine Vielzahl von Wellenleitern, die sich linear in ein und derselben Ebene erstrecken, wobei die Ebene parallel zu einer Ebene verläuft, die durch die geätzte Fläche des Substrats (10) gebildet wird, wobei jeder Wellenleiter (11) so gestaltet ist, dass er mindestens ein Lichtbündel leitet,
    - eine Vielzahl von Beugungsgittern (12), wobei jedes Beugungsgitter (12) jeweils in einem Wellenleiter (11) der Vielzahl von Wellenleitern ausgebildet ist, wobei jedes Beugungsgitter (12) so gestaltet ist, dass es das Lichtbündel, das sich in dem Wellenleiter (11) ausbreitet, aus dem Wellenleiter (11), in dem es ausgebildet ist, in Richtung der Ätzung (100) des Substrats (10) herausführt, wobei die Ätzung (100) des Substrats (10) so gestaltet ist, dass sie die Lichtbündel aus dem Substrat (10) in Richtung des zu beleuchtenden Aufnahmebereichs herausführt, wobei sich der Aufnahmebereich an der geätzten Fläche des Substrats (10) in Höhe der Ätzung (100) des Substrats (10) befindet, **dadurch gekennzeichnet, dass** mindestens zwei Wellenleiter der Vielzahl von Wellenleitern so gestaltet sind, dass sie Lichtbündel mit unterschiedlichen Wellenlängen aufnehmen können, wobei jedes Beugungsgitter (12) so gestaltet ist, dass es das Lichtbündel aus einem Wellenleiter (11) der mindestens zwei Wellenleiter, in denen es ausgebildet ist, aus dem Wellenleiter (11) in Richtung der Ätzung (100) des Substrats (10) herausführt, wobei sich das Lichtbündel aus den Lichtbündeln unterschiedlicher Wellenlänge in dem Wellenleiter (11) ausbreitet.

2. Photonischer Chip nach Anspruch 1, bei dem die Ätzung (100) des Substrats (10) so gestaltet ist, dass sie durch eine isotrope Ätzung des Substrats (10) gebildet wird, so dass die Ätzung (100) in einer Draufsicht auf das Substrat (10) einen Kreis bildet.

3. Photonischer Chip nach Anspruch 1, wobei die Ätzung (100) des Substrats (10) so gestaltet ist, dass sie durch eine anisotrope Ätzung des Substrats (10) gebildet wird, so dass die Ätzung (100) des Substrats (10) in einer Draufsicht auf das Substrat (10) ein Polygon bildet.

4. Photonenchip nach einem der Ansprüche 1 bis 3, bei dem jedes Beugungsgitter (12) um die Ätzung (100) des Substrats (10) herum in einer Symmetrieebene des Substrats (10) positioniert ist, wobei die Symmetrieebene senkrecht zu der Ebene verläuft, die durch die geätzte Fläche des Substrats (10) gebildet wird.

5. Photonischer Chip nach einem der vorhergehenden Ansprüche, der ferner einen Eingangswellenleiter (13) umfasst, in den alle Lichtbündel eingekoppelt werden sollen, wobei der photonische Chip ferner mindestens einen Demultiplexer (14) umfasst, der so gestaltet ist, dass er die Lichtbündel am Ausgang des Eingangswellenleiters (13) demultiplext, so dass mindestens ein Lichtbündel in mindestens zwei Wellenleiter (11) der Vielzahl von Wellenleitern eingekoppelt werden.

6. Photonischer Chip nach einem der Ansprüche 1 bis 5, der ferner eine Vielzahl von Eingangswellenleitern umfasst, in die jeweils ein Teil der Lichtbündel eingekoppelt werden sollen, wobei der photonische Chip ferner so viele Demultiplexer (14) wie Eingangswellenleiter umfasst, wobei jeder Demultiplexer (14) einem Eingangswellenleiter (13) zugeordnet ist, wobei die Demultiplexer (14) so gestaltet sind, dass sie die Lichtstrahlen am Ausgang des Eingangswellenleiters (13) demultiplexen, so dass mindestens ein Lichtbündel in die Wellenleiter (11) der Vielzahl von Wellenleitern eingekoppelt wird.

7. Photonischer Chip nach einem der vorhergehenden Ansprüche, bei dem die Wellenleiter dazu bestimmt sind, die Lichtbündel aus dem mittleren Infrarotbereich aufzunehmen.

8. Photonischer Chip nach einem der vorhergehenden Ansprüche, bei dem mindestens ein Wellenleiter (11) der Vielzahl von Wellenleitern so gestaltet ist, dass er mindestens zwei Lichtbündel mit unterschiedlichen Wellenlängen aufnimmt.

9. Bildgebungssystem mit:

    - einem photonischen Chip nach einem der vorhergehenden Ansprüche,
    - mindestens einem Beleuchtungsmodul (21), das so gestaltet ist, dass es eine Vielzahl von Lichtbündeln aussendet, wobei mindestens zwei Lichtbündel aus der Vielzahl von Lichtbündeln unterschiedliche Wellenlängen haben, wobei die Lichtbündel in die Wellenleiter des photonischen Chips eingekoppelt werden,
    - einem Aufnahmebereich, wobei sich der Aufnahmebereich auf der Ebene der Ätzung (100) des Substrats (10) befindet, und
    - einem Bildgebungsmodul.

10. Bildgebungssystem nach Anspruch 9, in dem der photonische Chip eine Dicke hat, die gleich einem Arbeitsabstand zwischen dem Bildgebungsmodul und dem Aufnahmebereich ist.

11. Bildgebungssystem nach Anspruch 9 oder 10, in dem der Arbeitsabstand zwischen dem Bildgebungsmodul und dem Aufnahmebereich in der gleichen Größenordnung liegt wie eine Länge einer zu beleuchtenden Fläche des Aufnahmebereichs, wobei der Arbeitsabstand zwischen 100 $\mu$m und 1,5 mm liegt.

12. Bildgebungssystem nach einem der Ansprüche 9 bis 11, in dem die Lichtbündel dem Infrarotbereich angehören.

**Claims**

1. A photonic chip for illuminating a scene, the photonic chip comprising:

    - a substrate (10) comprising a face with an etching (100),
    - a plurality of waveguides extending linearly in the same plane, said plane being parallel to a plane formed by the engraved face of the substrate (10), each waveguide (11) being configured to guide at least one light beam,
    - a plurality of diffraction gratings (12), each diffraction grating (12) being respectively formed in a waveguide (11) of the plurality of waveguides and each diffraction grating (12) being configured to extract, from the waveguide (11) in which it is formed and towards the etching (100) of the substrate (10), the light beam propagating in said waveguide (11), wherein the etching (100) of the substrate (10) is configured to extract the light beams from the substrate (10) towards the scene to be illuminated, said scene being located against the etched face of the substrate (10) and at the level of the etching (100) of the substrate (10), **characterized in that** at least two waveguides of the plurality of waveguides are configured to receive light beams of different wavelengths, each diffraction grating (12) being configured to extract, from the waveguide (11), from among the at least two waveguides in which it is formed, and towards the etching (100) of the substrate (10), the light beam, from among the beams of different wavelengths, propagating in said waveguide (11).

2. A photonic chip according to claim 1, wherein the etching (100) of the substrate (10) is configured to be formed by isotropic etching of the substrate (10), such that the etching (100) forms a circle when viewed from above the substrate (10).

3. A photonic chip according to claim 1, wherein the etching (100) of the substrate (10) is configured to be formed by anisotropic etching of the substrate (10), such that said etching (100) of the substrate (10) forms a polygon as viewed from above the substrate (10).

4. A photonic chip according to any one of claims 1 to 3, wherein each diffraction grating (12) is positioned around the etching (100) of the substrate (10) according to a plane of symmetry of said substrate (10), said plane of symmetry being perpendicular to the plane formed by the etched face of the substrate (10).

5. A photonic chip according to one of the preceding claims, further comprising an input waveguide (13) into which all light beams are to be injected, the photonic chip further comprising at least one demultiplexer (14) configured to demultiplex the light beams at the output of the input wave (13) so as to inject at least one light beam into at least two waves (11) of the plurality of waves.

**6.** A photonic chip according to any one of claims 1 to 5, further comprising a plurality of input waveguides into each of which a portion of the light beams is to be injected, the photonic chip further comprising as many demultiplexers (14) as there are input waveguides, each demultiplexer (14) being associated with an input waveguide (13), the demultiplexers (14) being configured to demultiplex the light beams at the output of the input waveguide (13) so as to inject at least one light beam into waveguides (11) of the plurality of waveguides.

**7.** A photonic chip according to one of the preceding claims, wherein the waveguides are intended to receive light beams belonging to the mid-infrared range.

**8.** A photonic chip according to one of the preceding claims, wherein at least one waveguide (11) among the plurality of waveguides is configured to receive at least two light beams of different wavelengths.

**9.** Imaging system comprising:

° a photonic chip according to one of the preceding claims,
° at least one illumination module (21) configured to emit a plurality of light beams, wherein at least two light beams among the plurality of light beams have different wavelengths, the light beams being injected into the waveguides of the photonic chip,
° a scene, said scene being located at the etching (100) of the substrate (10), and
° an imaging module.

**10.** Imaging system according to claim 9, wherein the photonic chip has a thickness equal to a working distance between the imaging module and the scene.

**11.** Imaging system according to claim 9 or 10, wherein the working distance between the imaging module and the scene is of the same order of magnitude as a length of a surface to be illuminated of the scene, the working distance being between $100\mu m$ and 1.5mm.

**12.** Imaging system according to one of claims 9 to 11, wherein the light beams belong to the infrared range.

[Fig. 1A]

[Fig. 1A]

[Fig. 1B]

[Fig. 2A]

[Fig. 2A]

[Fig. 2B]

[Fig. 3]

[Fig. 3]

[Fig. 4]

[Fig. 5]

## RÉFÉRENCES CITÉES DANS LA DESCRIPTION

**Documents brevets cités dans la description**

- EP 4016054 A

- EP 4016053 A

**Littérature non-brevet citée dans la description**

- **ROLA** ; **KRZYSZTOF P** ; **KONRAD PTASIŃSKI** ; **ADRIAN ZAKRZEWSKI** ; **IRENA ZUBEL**. Silicon 45° Micromirrors Fabricated by Etching in Alkaline Solutions with Organic Additives. *Microsystem Technologies*, 2014, vol. 20 (2), 221-26